# EUROPÄISCHE PATENTSCHRIFT

(11) **EP 0 988 624 B1**
(45) Veröffentlichungstag und Bekanntmachung des Hinweises auf die Patenterteilung: **21.07.2004**
(21) Anmeldenummer: 99924715.8
(22) Anmeldetag: 27.03.1999
(51) Int. Cl.: G08G 1/04

(54) **ANORDNUNG ZUR FAHRBAHNZUSTANDSERKENNUNG**
SYSTEM FOR RECOGNIZING ROAD CONDITIONS
DISPOSITIF POUR RECONNAITRE L'ETAT DE LA CHAUSSEE

(30) Priorität: 09.04.1998 DE 19816004
(43) Veröffentlichungstag der Anmeldung: 29.03.2000
(73) Patentinhaber: DaimlerChrysler AG, 70567 Stuttgart (DE)
(72) Erfinder: WANIELIK, Gerd, D-89079 Ulm (DE); SCHRECK, Andreas, D-89134 Blaustein (DE); FINKELE, Rolf, D-89601 Schelklingen (DE); KIPPENBERG, Tobias, D-28355 Bremen (DE)
(86) Internationale Anmeldenummer: PCT/DE1999/000942
(87) Internationale Veröffentlichungsnummer: WO 1999/053461

(56) Entgegenhaltungen:
- EP-A- 0 470 506
- WO-A-85/02266
- US-A- 5 218 206
- PATENT ABSTRACTS OF JAPAN vol. 005, no. 021 (P-048), 7. Februar 1981 (1981-02-07) & JP 55 147375 A (SUMITOMO ELECTRIC IND LTD), 17. November 1980 (1980-11-17)

## Beschreibung

Die Erfindung betrifft eine Anordnung zur Fahrbahnzustandserkennung nach dem Oberbegriff des Patentanspruchs 1.

Anordnungen zur Fahrbahnzustandserkennung bilden ein wesentliches Element der Verkehrssicherheit von Fahrzeugen. Ein Fahrbahnzustand mit deutlich verringerter Friktion der Fahrzeugreifen auf der Fahrbahn kann eine erhebliche Gefährdung darstellen. An einer zuverlässigen Anordnung zur Erkennung des Fahrbahnzustands besteht daher ein dringender Bedarf.

Aus der US 5,497,100 ist ein Oberflächen-Überwachungssystem bekannt, welches auch zur Erkennung des Zustands einer Fahrbahnoberfläche eingesetzt werden kann, und ein Mikrowellen-Sende/Empfangs-System mit einer oder mehrerer Betriebsfrequenzen umfaßt. Das unterschiedliche Reflexionsverhalten von trockener, nasser und vereister Fahrbahn wird zur Unterscheidung verschiedener Zustände der Fahrbahnoberfläche ausgewertet.

Andere bekannte Systeme verwenden Sende-Empfangs-Einrichtungen mit Infrarot-Strahlung, wobei vorzugsweise mehrere Wellenlängenbereiche benutzt und das unterschiedliche Reflexionsverhalten verschiedener Zustände der Fahrbahnoberfläche ausgewertet werden. In der DE 40 08 280 A1 wird beispielsweise aus einer Quotientenbildung detektierter Empfangssignale zu verschiedenen Wellenlängenbereiche eine Aussage über den Zustand der Fahrbahnoberfläche abgeleitet. Das Infrarot-Absorptionsverhalten von Wasser wird in Hydrological Processes, Vol. 5, Seiten 321-327 auch zur Bestimmung der Bodenfeuchte eingesetzt, indem für verschiedene IR-Wellenlängen das Reflexionsvermögen von Erdreich bestimmt wird.

Besonders vorteilhaft ist die Kombination eines Mikrowellen-Systems und eines Infrarot-Systems, da diese beiden Systeme sich in ihrer Unterscheidungsfähigkeit unterschiedlicher Fahrbahnzustände vorteilhaft ergänzen. So ist beispielsweise aus der DE 40 40 842 A1 ein Infrarot-Mikrowellen-Sensorsystem zur Erkennung des Fahrbahnzustands bekannt, welches zum einen eine Oberfläche mit breitbandiger IR-Strahlung beaufschlagt und rückgestreutes Licht getrennt in mehreren Wellenlängenbereichen detektiert und zum anderen das Reflexionsverhalten der Oberfläche für Mikrowellen mißt. Durch logische Verknüpfung der verschiedenen Meßsignale oder daraus abgeleiteter Signale in einer logischen Gatteranordnung wird eine Entscheidung über den Zustand der Fahrbahnoberfläche gewonnen. Ein ähnliches System ist aus der DE 196 03 557 A1 bekannt, bei welchem für das Infrarot-System ein erster Wellenlängenbereich bei einer Absorptionsbande von Wasser und ein zweiter Wellenlängenbereich mit geringer Absorption durch Wasser gewählt sind.

Der vorliegenden Erfindung liegt die Aufgabe zugrunde, eine Anordnung zur Erkennung des Zustands einer Fahrbahnoberfläche anzugeben, welche bei einfachem und kostengünstigem Aufbau eine verläßliche Aussage über den Fahrbahnzustand ermöglicht und insbesondere zur Verwendung in Straßenfahrzeugen geeignet ist.

Die Erfindung ist im Patentanspruch 1 beschrieben. Die Unteransprüche enthalten vorteilhafte Ausgestaltungen und Weiterbildungen der Erfindung.

Die Erfindung ermöglicht durch Maßnahmen zur verbesserten Unterscheidung der relevanten Signalanteile in der Infrarot-Empfangseinrichtung eine präzisere Beurteilung der Reflexions- und Absorptionseigenschaften des überwachten Oberflächenabschnitts und damit eine genauere und zuverlässigere Aussage über die Beschaffenheit dieses Oberflächenabschnitts. Grundlegend ist dabei, daß zumindest in einem der benutzten verschiedenen Wellenlängenbereiche die Intensität (Sendeleistung) der in diesem Wellenbereich emittierten IR-Strahlung zeitlich variiert wird und durch korrelierte Auswertung empfangener Strahlungsleistung in der Empfängereinrichtung unter Ausnutzung der Kenntnis der zeitlichen Variation der Intensität der emittierten Strahlung eine verbesserte Separation der verschiedenen Strahlungsanteile möglich ist. Die zeitliche Variation emittierter Strahlungsleistung mit korrelierter Auswertung des Empfangssignals ermöglicht insbesondere auch eine wirkungsvolle Eliminierung des Einflusses von immer vorhandenem Fremdlicht. Solche Maßnahmen sind mit geringem Aufwand möglich und erlauben dabei eine erhebliche Steigerung der getrennten Bewertung der einzelnen Signalanteile. Die einzelnen, zur Realisierung der zeitlichen Variation der Intensität der emittierten Strahlung als besonders vorteilhaft und bevorzugt angegebenen Maßnahmen sind für sich allein oder in verschiedener Kombination durchführbar. Die konstruktive und/oder schaltungstechnische Verwirklichung dieser Maßnahmen ist dem Fachmann an sich geläufig. Zum Teil sind solche Maßnahmen in anderem Zusammenhang bereits bekannt, so daß für die Verwirklichung auf Erfahrungen aus anderen Gebieten zurückgegriffen werden kann.

Die zeitliche Variation kann sowohl nur die Strahlung in einem Wellenlängenbereich als auch die Variation der Intensität der emittierten Strahlung in beiden Wellenlängenbereichen betreffen. Die Nennung von zwei Wellenlängenbereichen soll nicht ausschließen, daß mehr als zwei unterscheidbare Wellenlängenbereich eingesetzt und ausgewertet werden. Im Interesse einer einfachen und kostengünstigen Anordnung ist jedoch eine Ausführungsform mit zwei verschiedenen Infrarot-Wellenlängenbereichen bevorzugt. Es zeigt sich, daß mit zwei verschiedenen Wellenlängenbereichen, insbesondere einem Wellenlängenbereich mit geringer Absorption in Wasser, beispielsweise bei ca. 950 nm und einem zweiten Wellenlängenbereich mit hoher Absorption durch Wasser (Wasserabsorptionsbande) beispielsweise bei 1350 nm eine gute Beurteilung des Oberflächenzustands einer Fahrbahn möglich ist.

Gemäß einer ersten vorteilhaften Ausführungsform wird die Zeitvariation der Intensität der emittierten Strahlung durch Takten der Strahlungsleistung, insbesondere durch Umschalten zwischen einem Einschalt-Leistungspegel und einem Emitterzustand ohne Abstrahlung von IR-Leistung erzielt. Vorzugsweise sind beide Wellenlängenbereich in einem solchen Takt-Modus betrieben, wobei die Abstrahlung von Leistung in den beiden verschiedenen Wellenlängenbereichen im Zeitmultiplex erfolgt und vorteilhafterweise noch Emissionspausen vorgesehen sind. Durch die Zeitmultiplex-Taktung können auch Empfangs-Intervalle definiert werden, in welchen lediglich Strahlung eines Wellenlängenbereiches als Nutzsignalanteil erwartet wird. Eine Trennung der Signalanteile der verschiedenen Wellenlängenbereiche ist damit auf besonders einfache Weise möglich. Die Länge der Schaltintervalle ist vorzugsweise sehr groß gewählt gegenüber der Laufzeit der emittierten Strahlung vom Emitter über die ausgeleuchtete Oberfläche in die Empfangseinrichtung, so daß eine Phasenverschiebung der Taktsignale nicht gesondert berücksichtigt werden muß. Durch das Vorsehen von Emissionspausen kann in solchen Zeitintervallen vorteilhafterweise in der Empfangseinrichtung der Anteil von Fremdstrahlung in den beiden Nutz-Wellenlängenbereichen bestimmt und bei der Auswertung in den Beleuchtungsintervallen mitberücksichtigt werden, beispielsweise durch Subtraktion eines entsprechenden Fremdsignalanteils und/oder durch Beeinflussung des Arbeitspunktes eines oder mehrerer Empfängerelemente.

Eine weitere vorteilhafte Variante zur Realisierung der zeitlichen Variation der Intensität der emittierten IR-Strahlung umfaßt eine periodische Modulation der Strahlungsleistung. Vorteilhafterweise werden die Intensitäten in beiden Wellenlängenbereichen mit unterschiedlichen Modulationsfrequenzen moduliert und die Signalanteile in der Empfangseinrichtung durch frequenzselektive Demodulation, beispielsweise Synchrongleichrichtung oder Bandpassfilterung voneinander und von einem Fremdsignalanteil abgetrennt. Die Modulation erfolgt vorzugsweise hochfrequent im Bereich von beispielsweise 10 - 100 kHz. Durch die Modulation der Intensitäten in beiden Wellenlängenbereichen mit unterschiedlichen Modulationsfrequenzen kann in beiden Wellenlängenbereichen gleichzeitig emittiert, empfangen und ausgewertet werden, so daß jeweils gleiche Zeitabschnitte und damit Rückstreuungen von denselben Oberflächenabschnitten bearbeitet und durch Vergleich ausgewertet werden können.

Eine andere vorteilhafte Möglichkeit zur zeitlichen Variation der Intensität ist in einer gepulsten Emission von IR-Strahlung zu sehen, wobei vorteilhafterweise die Ein- und Austastpulse in ihrer Länge, Folgezeit oder dgl. nach einem der an sich bekannten Pulscode-Muster gewählt sind und auf der Seite der Empfangseinrichtung durch Korrelation mit Kompressionsfiltem oder dgl. in an sich bekannter Weise eine Trennung der Signalanteile erfolgt. Auch hierbei kann bei für verschiedene Wellenlängenbereiche unterschiedlicher Pulscodierung eine Strahlungsemission in beiden Wellenlängenbereichen gleichzeitig erfolgen. Die Emitterelemente der Sendeeinrichtung können insbesondere vorteilhafterweise Leuchtdioden oder Laserdioden sein. Solche Dioden sind kostengünstig erhältlich, benötigen ein geringes Einbauvolumen und sind leicht elektrisch ansteuerbar. Emitter-Dioden für die beiden bereits als bevorzugt genannten Wellenlängenbereiche sind an sich bekannt. Eine erste Ausführungsform sieht zwei getrennte Emitterelemente für die beiden benutzten Wellenlängenbereiche vor. Es kann jedoch auch ein gemeinsames Emitterelement, welches in zwei Wellenlängenbereichen separat ansteuerbar emittieren kann, eingesetzt sein. Ferner kann für die Emission der Strahlung ein gemeinsames, breitbandig strahlendes Emitterelement vorgesehen sein, wobei dann die Unterscheidung der Wellenlängenbereiche durch wellenlängenselektive Filter für die beiden Wellenlängenbereiche im Strahlungsweg erfolgen kann.

Bei Verwendung getrennter Emitterelemente für die unterschiedlichen Wellenlängenbereiche sind diese getrennten Emitterelemente vorzugsweise durch separate elektrische Signale von einer Steuereinrichtung, Taktgebern oder dgl. angesteuert. Bei Verwendung eines breitbandig strahlenden Emitterelements kann eine Variation der Intensität der abgestrahlten Leistung in einem oder beiden Wellenlängenbereichen durch steuerbare Lichtventile im Weg der Strahlung, beispielsweise steuerbare Flüssigkristall-Fenster erfolgen. Die Wellenlängenfilter können mit den steuerbaren Lichtventilen baulich vereint sein. Als Strahlungselement kann dann auch ein konventioneller Temperatur-IR-Strahler verwandt werden.

Die Empfangseinrichtung enthält bevorzugt für die verschiedenen Wellenlängenbereiche der zu detektierenden Strahlung getrennte Empfangselemente, deren Wellenlängenselektivität entweder bevorzugt durch die Materialzusammensetzung von Halbleiter-Empfangselementen oder durch vorgeschaltete wellenllängenselektive Filter gegeben ist. Die zeitliche Variation der Intensität der abgestrahlten Leistung erlaubt aber auch durch die korrespondierende, diese Variation berücksichtigende Auswertung den Einsatz eines für beide Wellenlängenbereiche gemeinsamen breitbandigen Empfangselements, wobei dann die Trennung der verschiedenen Strahlungsanteile in eine nachgeordnete Auswerteelektronik, beispielsweise mit diskret aufgebauten Filtern oder dergleichen und/oder eine digitale Signalverarbeitung verlagert wird. Als Empfangselemente in der Empfangseinrichtung sind insbesondere Photodioden geeignet, bei welchen sich noch die vorteilhafte Möglichkeit der einfachen Arbeitspunkteinstellung, beispielsweise in Abhängigkeit von einem detektierten Fremdstrahlungspegel ergibt.

Sendeeinrichtung und Empfangseinrichtung der IR-Auswertung sind vorzugsweise für beide Wellenlängenbereiche baulich vereint und bilden eine monostatische Anordnung, d.h., daß Sendeeinrichtung und Empfangseinrichtung im wesentlichen am selben Ort angeordnet sind. Die Richtung der Abstrahlung von IR-Sendeleistung und des Empfangs rückgestreuter Strahlung liegen vorzugsweise innerhalb eines Winkelbereichs zwischen 0° und 30° gegen die Flächennormale der überwachten Oberfläche. Bei der bevorzugten Anwendung in einem Kraftfahrzeug wird dabei dann ein unterhalb der Anordnung befindlicher Flächenabschnitt ausgeleuchtet und überwacht.

Besonders vorteilhaft ist eine Anordnung, bei weicher die beschriebenen IR-Sende/Empfangseinrichtungen mit einer zusätzlichen Mikrowellen-Sende/Empfangseinrichtung kombiniert betrieben sind, wodurch sich durch die an sich bekannten Auswertungsmöglichkeiten eine besonders zuverlässige Unterscheidung der relevanten Fahrbahnzustände durchführen läßt. Die Sendeleistung der Mikrowelleneinrichtung kann gleichfalls zeitlich variiert sein, wodurch beim Einsatz in Straßenfahrzeugen die gegenseitige Störung von in getrennten Fahrzeugen untergebrachten ähnlichen Anordnungen verringert oder eliminiert werden kann.

Die Sensoren, insbesondere die Mikrowellensensoren, teilweise auch die Emitter können ein temperaturabhängiges Verhalten zeigen, welches die Meßergebnisse beeinflussen kann. Zur Eliminierung solcher Fehler sind an oder in der Nähe von Komponenten mit starker Temperaturabhängigkeit vorteilhafterweise Temperatursensoren angebracht. Die Korrektur der Meßsignale nach Maßgabe der gemessenen Temperaturen erfolgt vorzugsweise in Form einer digitalen Signalverarbeitung.

Zur Entscheidung über einen von mehreren zu unterscheidenden Fahrbahnzuständen können die in der Empfangseinrichtung bestimmten Meßwerte zu Strahlungsanteilen in den verschiedenen Wellenlängenbereichen gemäß einer vorteilhaften Weiterbildung der Erfindung als Eingangsgrößen einem Klassifikator zugeführt sein, welcher eine Zuordnung zu einer von mehreren Klassen für den Fahrbahnzustand trifft. Die in der Empfangseinrichtung bestimmten Meßwerte werden hierfür einer Analog/Digital-Wandlung unterzogen. Der Vorteil eines Klassifikators liegt insbesondere darin, daß für die Zuordnungsvorschrift einer Klasse zu einer Kombination von Meßwerten keine expliziten Modelle über die Rückstreueigenschaften bestimmter Fahrbahnzustände gemacht werden müssen, sondern daß der Klassifikator anhand von Trainingsbeispielen eingestellt werden kann. Neben den Meßwerten zu Signalanteilen aus den beiden IR-Wellenlängenbereichen und ggf. der zusätzlichen Mikrowelleneinrichtung ist dem Klassifikator vorzugsweise auch mindestens ein Meßwert zu empfangener Fremdstrahlung in mindestens einem der Wellenlängenbereiche als weitere Eingangsgröße zugeführt. Eine besonders günstige Ausführungsform eines Klassifikators enthält eine Look-up-Tabelle. Die Meßsignale oder daraus abgeleitete Signale dienen in digitalisierter Form als Adressen oder Teiladressen für die Tabellenadressierung. Die Tabelleninhalte sind die Fahrbahnzustandsklassen.

Einzelne Bestandteile der erfindungsgemäßen Anordnung können auch in Verbindung mit weiteren Meßsystemen beschrieben sein und/oder verknüpft werden. Beispielsweise können die Meßergebnisse von ggf. vorhandenen Geschwindigkeitssensoren und Außentemperaturfühlern mit einer Fahrbahnzustands-Aussage aus der erfindungsgemäßen Anordnung verknüpft werden zu einer abschließenden Entscheidung. Die einzelnen Komponenten der Sendeeinrichtung und der Empfangseinrichtung des IR-Systems sowie Komponenten des Mikrowellensystems können vollständig oder teilweise auf einem gemeinsamen integrierten Schaltkreis realisiert sein. Neben der Wellenlängentrennung kann auch noch das polarimetrische Verhalten der überwachten Fahrbahnoberfläche bestimmt und mitberücksichtigt werden. Aus der Entscheidung über den Zustand der überwachten Fahrbahn können bei Erkennen auf das Vorliegen eines Fahrbahnzustands mit schlechten Reifenhaftungseigenschaften in an sich bekannter Weise optische und/oder akustische Warnsignale abgegeben oder Direkteingriffe in den Fahrzustand, beispielsweise durch Verringerung der Geschwindigkeit vorgenommen werden.

Die Erfindung ist nachfolgend anhand von bevorzugten Ausführungsbeispielen unter Bezugnahme auf die Abbildungen noch eingehend veranschaulicht. Dabei zeigt:
- Fig. 1: ein Blockschaltbild einer ersten Ausführungsform
- Fig. 2: ein Blockschaltbild einer zweiten Ausführungsform

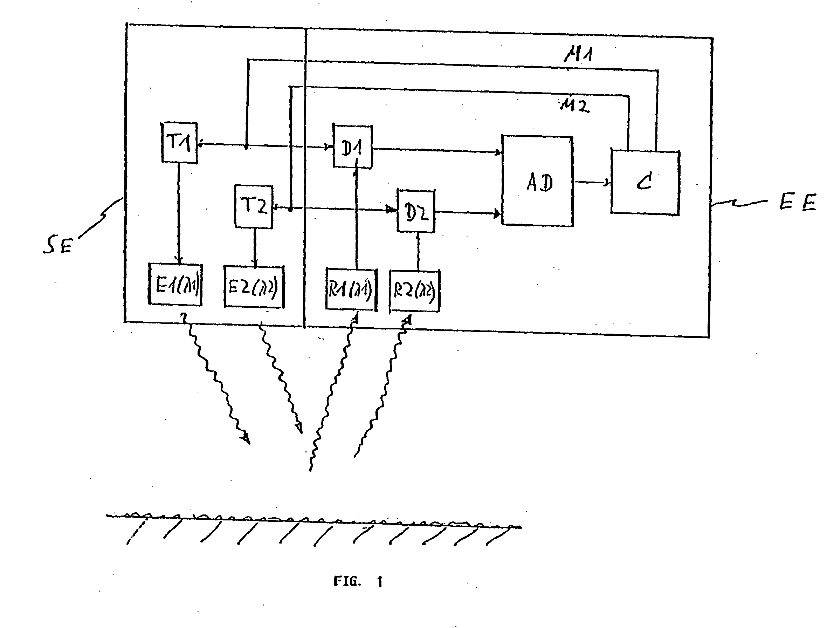

Die in Fig. 1 skizzierte Anordnung enthält eine Infrarot-Sendeeinrichtung SE und eine Infrarot-Empfangseinrichtung EE. Die Sendeeinrichtung SE enthält ein erstes Emitterelement E1, welches in einem ersten Wellenlängenbereich um eine erste Wellenlänge λ1 in Richtung der Oberfläche einer Fahrbahn F emittiert und ein zweites Emitterelement E2, welches Strahlung in einem zweiten Wellenlängenbereich um eine zweite Wellenlänge λ2 in Richtung der Fahrbahnoberfläche emittiert, mit beispielsweise λ1=950 nm und λ2=1350 nm. Der zeitliche Verlauf der Intensität der von den beiden Emitterelementen abgegebenen Strahlung ist durch zwei Taktgeber T1 bzw. T2 gesteuert. Die an der Fahrbahnoberfläche rückgestreute Strahlung wird in der Empfangseinrichtung von zwei Empfangselementen R1 für einen ersten Wellenlängenbereich um λ1 und R2 für einen zweiten Wellenlängenbereich um λ2 wellenlängenselektiv aufgenommen. Die spektralen Kurven der Emitterelemente E1 bzw. E2 und der vom Wellenlängenbereich her zugeordneten Empfangselemente R1 bzw. R2 sind nicht notwendig vollständig übereinstimmend. Ferner können die Spektralkurven der getrennten Emitterelemente und/oder der getrennten Empfangselemente sich überlappen.

Die in den Empfangselementen R1, R2 aufgenommenen Strahlungsanteile zeigen entsprechend der zeitlichen Variation der emittierten Strahlung gleichfalls eine zeitliche Variation in der Intensität, welche in Demodulatoren D1, D2 zur weiteren Verringerung der Störsignalanteile in den empfangenen Signalen berücksichtigt wird. Hierzu sind beispielsweise Modulationssteuersignale M1, M2 von einer Steuereinrichtung sowohl den Taktgebern T1, T2 der Emitterelemente als auch den Demodulatoren D1, D2 der Empfangselemente zugeleitet. Die Demodulatoren D1, D2 können beispielsweise Synchrongleichrichter, Zeitschaltungen, Bandpaßfilter oder andere zur Ausnutzung der Zeitinformation geeignete Schaltungen aufweisen. Ferner können Signalanteile zum Ausgleich kurzfristiger Schwankungen über einen vorgebbaren Zeitraum integriert werden.

Die Ausgangssignale der Demodulatoren D1, D2 sind einer Analog/Digital-Wandler-Anordnung A/D zugeführt und werden in digitaler Form in einer Auswerteschaltung C, beispielsweise einem Prozessor, einer anwenderspezifischen programmierbaren Schaltung oder dgl. weiter ausgewertet. Die Auswerteschaltung C kann gleichzeitig auch als Steuerschaltung für die Erzeugung der Modulationssteuersignale M1, M2 dienen.

Die Emitterelemente E1, E2 und die Empfangselemente R1, R2 sind gegen die Fahrbahn vorzugsweise durch strahlungsdurchlässige Fenster mit schmutzabweisender Oberflächenbeschichtung geschützt. Die Fenster können zur Strahlungsbündelung auch Linsenform aufweisen.

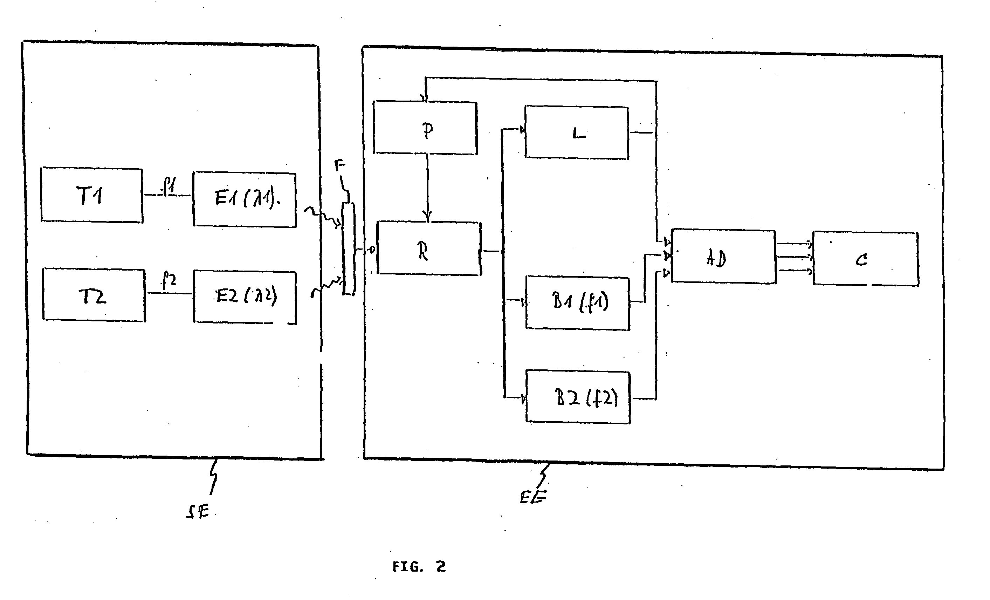

Bei der in Fig. 2 skizzierten Anordnung ist die Fahrbahn in anderer Darstellung als Übertragungsglied F mit bestimmten Übertragungseigenschaften entsprechend der Oberflächenbeschaffenheit der Fahrbahn im Strahlungsweg zwischen getrennten Emittern E1, E2 der Sendeeinrichtung SE und einem gemeinsamen breidbandigen Empfangselement R in der Empfangseinrichtung EE skizziert. Das Empfangselement R sei beispielsweise eine Photodiode, deren Arbeitspunkteinstellungen durch einen Regler P vorgenommen und verändert werden kann. Das Ausgangssignal des breitbandigen Empfangselements R wird parallel auf einen Tiefpaß L, ein erstes Bandpaßfilter B1 und ein zweites Bandpaßfilter B2 geleitet. Die Taktgeber T1, T2 in der Sendeeinrichtung sollen in diesem Fall die Intensität der von den Emitterelementen E1, E2 abgegebenen Strahlung mit verschiedenen hochfrequenten Modulationsfrequenzen F1, F2 modulieren. Die Mittenfrequenzen der Bandpaßfilter B1 bzw. B2 sind auf die Modulationsfreqeunzen F1, F2 der Taktgeber T1 bzw. T2 in der Sendeeinrichtung abgestimmt und Filtern die zu den verschiedenen Wellenlängen gehörenden rückgestreuten Signalanteile aus dem elektrischen Ausgangssignal des optisch breitbandigen Detektors R aus. Über den Tiefpaß R kann ein Wert für den unmodulierten Fremdstrahlungsanteil bestimmt werden. Dieser Wert für den Fremdstrahlungsanteil kann beispielsweise zur Einstellung und Nachregelung des Arbeitspunktes des gemeinsamen Empfangselements R über den Arbeitspunktregler P herangezogen werden.

Die Ausgangssignale des Tiefpasses L, des Bandpaßfilters B1 und des Bandpaßfilters B2 sind einem A/D-Wandler zugeleitet, welcher sie in digitalisierter Form an eine Auswerteschaltung C weitergibt.

## Patentansprüche

1. Anordnung zur Fahrbahnzustandserkennung mit einer Infrarot-Anordnung, welche mittels einer IR-Sendeeinrichtung einen Fahrbahnbereich ausleuchtet und mittels einer IR-Empfangseinrichtung Strahlung von der Fahrbahn aufnimmt und die Intensität rückgestreuter IR-Strahlung in zwei unterschiedlichen Wellenlängenbereichen für eine Aussage über den Fahrbahnzustand auswertet, **dadurch gekennzeichnet, daß** die Sendeeinrichtung die emittierte IR-Strahlung in zumindest einem der beiden Wellenlängenbereiche zeitlich in der Intensität variiert und die Empfangseinrichtung zumindest einen Teil der rückgestreuten Strahlung mit dem Zeitverlauf der Intensitätsvariation der emittierten Strahlung korreliert.

2. Anordnung nach Anspruch 1, **dadurch gekennzeichnet, daß** die Zeitvariation ein Takten der Intensität der emittierten Strahlung umfaßt.

3. Anordnung nach Anspruch 1 oder 2, **dadurch gekennzeichnet, daß** die Zeitvariation eine periodische Modulation der emittierten Strahlung umfaßt.

4. Anordnung nach einem der Ansprüche 1 bis 3, **dadurch gekennzeichnet, daß** die zeitliche Variation eine Pulskodierung der emittierten Strahlung umfaßt.

5. Anordnung nach einem der Ansprüche 1 bis 4, **dadurch gekennzeichnet, daß** die Sendeeinrichtung die Intensität für beide Wellenlängenbereiche mit unterschiedlichen zeitlichen Verläufen variiert.

6. Anordnung nach Anspruch 5, **dadurch gekennzeichnet, daß** die Sendeeinrichtung Strahlung in den beiden Wellenlängenbereichen im Zeitmultiplex emittiert.

7. Anordnung nach Anspruch 6, **dadurch gekennzeichnet, daß** die Sendeeinrichtung die Strahlung in den beiden Wellenlängenbereichen mit unterschiedlichen Modulationsfrequenzen moduliert.

8. Anordnung nach einem der Ansprüche 1 bis 7, **dadurch gekennzeichnet, daß** die Sendeeinrichtung während Emissionspausen keine Strahlung emittiert.

9. Anordnung nach Anspruch 8, **dadurch gekennzeichnet, daß** die Empfangseinrichtung während der Emissionspausen einen Wert für Fremdstrahlung in mindestens einem der beiden Wellenlängenbereiche bestimmt.

10. Anordnung nach Anspruch 9, **dadurch gekennzeichnet, daß** die Empfangseinrichtung den für die Fremdstrahlung bestimmten Wert zur Arbeitspunkteinstellung eines Empfangselements heranzieht.

11. Anordnung nach einem der Ansprüche 1 bis 10, **dadurch gekennzeichnet, daß** die Sendeeinrichtung zwei separate Emitter für die beiden Wellenlängenbereiche aufweist.

12. Anordnung nach einem der Ansprüche 1 bis 10, **dadurch gekennzeichnet, daß** die Sendeeinrichtung einen breitbandigen Emitter für beide Wellenlängenbereiche und im Strahlungsweg angeordnete wellenlängenselektive Filter für die beiden Wellenlängenbereiche aufweist.

13. Anordnung nach Anspruch 11, **dadurch gekennzeichnet, daß** die Sendeeinrichtung die Intensitäten der von den separaten Emittern abgegebenen Strahlung variiert.

14. Anordnung nach einem der Ansprüche 1 bis 13, **gekennzeichnet durch** steuerbare Lichtventile im Weg der Strahlung.

15. Anordnung nach einem der Ansprüche 1 bis 14, **dadurch gekennzeichnet, daß** die Empfangseinrichtung separate Empfangselemente für die beiden Wellenlängenbereiche enthält.

16. Anordnung nach einem der Ansprüche 1 bis 14, **dadurch gekennzeichnet, daß** die Empfangseinrichtung ein gemeinsames breitbandiges Empfangselement für beide Wellenlängenbereiche enthält.

17. Anordnung nach einem der Ansprüche 1 bis 16, **gekennzeichnet durch** Leuchtdioden und/oder Laserdioden als Emitter.

18. Anordnung nach einem der Ansprüche 1 bis 17, **gekennzeichnet durch** eine oder mehrere Photodioden als Empfangselemente.

19. Anordnung nach einem der Ansprüche 1 bis 18, **dadurch gekennzeichnet, daß** Sendeeinrichtung und Empfangseinrichtung monostatisch angeordnet sind.

20. Anordnung nach einem der Ansprüche 1 bis 19, **gekennzeichnet durch** eine zusätzliche Mikrowellen-Sende/Empfangs-Einrichtung.

21. Anordnung nach Anspruch 20, **dadurch gekennzeichnet, daß** die Sendeleistung der Mikrowelleneinrichtung gleichfalls zeitlich variiert ist.

22. Anordnung nach einem der Ansprüche 1 bis 21, **dadurch gekennzeichnet, daß** Meßwerte der Empfangseinrichtung nach Analog/Digital-Wandlung einem Klassifikator zugeführt sind, welcher eine Zuordnung zu einer von mehreren Klassen für den Fahrbahnzustand trifft.

23. Anordnung nach Anspruch 22, **dadurch gekennzeichnet, daß** die dem Klassifikator zugeführten Meßwerte zumindest Meßwerte zu rückgestreuten Sendesignalen in den beiden Wellenlängenbereichen umfassen.

24. Anordnung nach Anspruch 22 oder 23, **dadurch gekennzeichnet, daß** dem Klassifikator mindestens ein Meßwert zu empfangener Fremdstrahlung zugeführt ist.

## Claims

1. Arrangement for detecting the state of a roadway, having an infrared arrangement which irradiates an area of the roadway by means of an infrared transmitter device and picks up radiation from the roadway by means of an infrared receiver device and evaluates the intensity of scattered-back infrared radiation in two different wavelength ranges in order to obtain definitive information about the state of the roadway, **characterized in that** the transmitter device varies the intensity of the emitted infrared radiation over time in at least one of the two wavelength ranges, and the receiver device correlates at least a part of the scattered-back radiation with the time profile of the intensity variation of the emitted radiation.

2. Arrangement according to Claim 1, **characterized in that** the variation over time comprises clocking the intensity of the emitted radiation.

3. Arrangement according to Claim 1 or 2, **characterized in that** the variation over time comprises a periodic modulation of the emitted radiation.

4. Arrangement according to one of Claims 1 to 3, **characterized in that** the variation over time comprises pulse coding of the emitted radiation.

5. Arrangement according to one of Claims 1 to 4, **characterized in that** the transmitter device varies the intensity for both wavelength ranges with different time profiles.

6. Arrangement according to Claim 5, **characterized in that** the transmitter device emits radiation in the time-division multiplex mode in the two wavelength ranges.

7. Arrangement according to Claim 6, **characterized in that** the transmitter device modulates the radiation with different modulation frequencies in the two wavelength ranges.

8. Arrangement according to one of Claims 1 to 7, **characterized in that** the transmitter device does not emit any radiation during breaks in emission.

9. Arrangement according to Claim 8, **characterized in that** during the breaks in emission the receiver device determines a value for extraneous radiation in at least one of the two wavelength ranges.

10. Arrangement according to Claim 9, **characterized in that** the receiver device uses the value intended for the extraneous radiation to set the working point of a receiver element.

11. Arrangement according to one of Claims 1 to 10, **characterized in that** the transmitter device has two separate emitters for the two wavelength ranges.

12. Arrangement according to one of Claims 1 to 10, **characterized in that** the transmitter device has a broadband emitter for both wavelength ranges, and wavelength-selective filters, arranged in the propagation path, for the two wavelength ranges.

13. Arrangement according to Claim 11, **characterized in that** the transmitter device varies the intensities of the radiation which is emitted by the separate emitters.

14. Arrangement according to one of Claims 1 to 13, **characterized by** controllable light valves in the path of the radiation.

15. Arrangement according to one of Claims 1 to 14, **characterized in that** the receiver device contains separate receiver elements for the two wavelength ranges.

16. Arrangement according to one of Claims 1 to 14, **characterized in that** the receiver device contains a common broadband receiver element for both wavelength ranges.

17. Arrangement according to one of Claims 1 to 16, **characterized by** light-emitting diodes and/or laser diodes as emitters.

18. Arrangement according to one of Claims 1 to 17, **characterized by** one or more photodiodes as receiver elements.

19. Arrangement according to one of Claims 1 to 18, **characterized in that** the transmitter device and receiver device are arranged monostatically.

20. Arrangement according to one of Claims 1 to 19, **characterized by** an additional microwave transmitter/receiver device.

21. Arrangement according to Claim 20, **characterized in that** the transmission power of the microwave device is also varied over time.

22. Arrangement according to one of Claims 1 to 21, **characterized in that** measured values of the receiver device are fed, after analogue/digital conversion, to a classifier which makes an assignment to one of a plurality of classes for the state of the roadway.

23. Arrangement according to Claim 22, **characterized in that** the measured values which are fed to the classifier comprise at least measured values for scattered-back transmission signals in the two wavelength ranges.

24. Arrangement according to Claim 22 or 23, **characterized in that** at least one measured value relating to received extraneous radiation is fed to the classifier.

## Revendications

1. Arrangement pour reconnaître l'état de la chaussée muni d'un arrangement à infrarouge qui éclaire une zone de la chaussée au moyen d'un dispositif d'émission IR et enregistre le rayonnement de la chaussée au moyen d'un dispositif de détection IR et évalue l'intensité du rayonnement IR rétrodiffusé dans deux plages de longueur d'onde différentes en vue d'une information sur l'état de la chaussée, **caractérisé en ce que** le dispositif d'émission fait varier dans le temps l'intensité du rayonnement IR émis dans au moins l'une des deux plages de longueur d'onde et le dispositif de réception corrèle au moins une partie du rayonnement rétrodiffusé avec la courbe temporelle de la variation de l'intensité du rayonnement émis.

2. Arrangement selon la revendication 1, **caractérisé en ce que** la variation dans le temps comprend un cadencement de l'intensité du rayonnement émis.

3. Arrangement selon la revendication 1 ou 2, **caractérisé en ce que** la variation dans le temps comprend une modulation périodique du rayonnement émis.

4. Arrangement selon l'une des revendications 1 à 3, **caractérisé en ce que** la variation dans le temps comprend un codage par impulsions du rayonnement émis.

5. Arrangement selon l'une des revendications 1 à 4, **caractérisé en ce que** le dispositif d'émission fait varier l'intensité pour les deux plages de longueur d'onde avec des courbes temporelles différentes.

6. Arrangement selon la revendication 5, **caractérisé en ce que** le dispositif d'émission émet un rayonnement multiplexé dans le temps dans les deux plages de longueur d'onde.

7. Arrangement selon la revendication 6, **caractérisé en ce que** le dispositif d'émission émet le rayonnement dans les deux plages de longueur d'onde avec des fréquences de modulation différentes.

8. Arrangement selon l'une des revendications 1 à 7, **caractérisé en ce que** le dispositif d'émission n'émet aucun rayonnement pendant les pauses d'émission.

9. Arrangement selon la revendication 8, **caractérisé en ce que** le dispositif de réception détermine pendant les pauses d'émission une valeur pour le rayonnement parasite dans au moins l'une des deux plages de longueur d'onde.

10. Arrangement selon la revendication 9, **caractérisé en ce que** le dispositif d'émission utilise la valeur déterminée pour l'émission parasite pour régler le point de fonctionnement d'un élément de réception.

11. Arrangement selon l'une des revendications 1 à 10, **caractérisé en ce que** le dispositif d'émission présente deux émetteurs séparés pour les deux plages de longueur d'onde.

12. Arrangement selon l'une des revendications 1 à 10, **caractérisé en ce que** le dispositif d'émission présente un émetteur à large bande pour les deux plages de longueur d'onde et un filtre à sélection de longueur d'onde disposé dans le trajet du rayon pour les deux plages de longueur d'onde.

13. Arrangement selon la revendication 11, **caractérisé en ce que** le dispositif d'émission fait varier les intensités du rayonnement délivré par les émetteurs séparés.

14. Arrangement selon l'une des revendications 1 à 13, **caractérisé par** des clapets à lumière commandables dans le trajet du rayonnement.

15. Arrangement selon l'une des revendications 1 à 14, **caractérisé en ce que** le dispositif de réception contient des éléments de réception séparés pour les deux plages de longueur d'onde.

16. Arrangement selon l'une des revendications 1 à 14, **caractérisé en ce que** le dispositif de réception contient un élément de réception à large bande commun pour les deux plages de longueur d'onde.

17. Arrangement selon l'une des revendications 1 à 16, **caractérisé par** des diodes électroluminescentes et/ou des diodes laser faisant office d'émetteur.

18. Arrangement selon l'une des revendications 1 à 17, **caractérisé par** une ou plusieurs photodiodes faisant office d'éléments récepteurs.

19. Arrangement selon l'une des revendications 1 à 18, **caractérisé en ce que** le dispositif d'émission et le dispositif de réception sont disposés de manière monostatique.

20. Arrangement selon l'une des revendications 1 à 19, **caractérisé par** un dispositif d'émission/réception d'hyperfréquences supplémentaire.

21. Arrangement selon la revendication 20, **caractérisé en ce que** la puissance d'émission du dispositif à hyperfréquences est elle aussi variée dans le temps.

22. Arrangement selon l'une des revendications 1 à 21, **caractérisé en ce que** les valeurs mesurées du dispositif de réception sont acheminées après conversion analogique/numérique à un classificateur qui effectue une affectation de l'état de la chaussée à une classe parmi plusieurs.

23. Arrangement selon la revendication 22, **caractérisé en ce que** les valeurs mesurées acheminées au classificateur comprennent au moins les valeurs mesurées relatives aux signaux émis rétrodiffusés dans les deux plages de longueur d'onde.

24. Arrangement selon la revendication 22 ou 23, **caractérisé en ce qu'**au moins une valeur mesurée relative au rayonnement parasite reçu est acheminée au classificateur.
